# EUROPEAN PATENT SPECIFICATION

(11) **EP 2 211 212 B1**
(45) Date of publication and mention of the grant of the patent: **03.12.2014**
(21) Application number: 10075028.0
(22) Date of filing: 20.01.2010
(51) Int. Cl.: G02B 6/02, G02B 6/036

(54) **Single-mode optical fibre having an enlarged effective area**
Einmoden-Glasfaser mit einem erweiterten Wirkungsbereich
Fibre optique monomodale dotée d'une zone effective étendue

(30) Priority: 27.01.2009 FR 0900342; 27.01.2009 US 147586 P
(43) Date of publication of application: 28.07.2010
(73) Proprietor: Draka Comteq B.V., 1083 HJ Amsterdam (NL)
(72) Inventor: Sillard, Pierre, 78150 Le Chesnay (FR); Molin, Denis, 91210 Draveil (FR); De Montmorillon, Louis-Anne, 78000 Versailles (FR); Bigot-Astruc, Marianne, 91460 Marcoussis (FR); Richard, Simon, 91140 Villebon sur Yvette (FR)
(74) Representative: Algemeen Octrooi- en Merkenbureau B.V.

(56) References cited:
- EP-A- 1 477 831
- EP-A- 1 978 383
- ITU: "UIT-T G.652 SÉRIE G: SYSTÈMES ET SUPPORTS DE TRANSMISSION, SYSTÈMES ET RÉSEAUX NUMÉRIQUES Caractéristiques des supports de transmission Câbles à fibres optiques Caractéristiques des câbles et fibres optiques monomodes" INTERNET CITATION, 1 June 2005 (2005-06-01), page Complete, XP007909783

## Description

The present invention relates to the field of optical fibre transmissions, and more specifically, a line fibre having an enlarged effective area.

For optical fibres, the refractive index profile is generally classified according to the appearance of the graph of the function which associates the refractive index with the radius of the optical fibre. In standard fashion, the distance r to the centre of the optical fibre is shown on the x-axis. On the y-axis, the difference between the refractive index (at radius r) and the refractive index of the fibre cladding is shown. Thus the terms "step", "trapezium", "triangle", or "alpha" index profile are used to describe graphs having curves with the shapes of a step, trapezoid, triangle, or alpha respectively. These curves are generally representative of the theoretical or set profile of the optical fibre, whilst the manufacturing constraints of the optical fibre may result in a slightly different profile.

In standard fashion, an optical fibre is composed of an optical core the function of which is to transmit and optionally, amplify an optical signal, and an optical cladding the function of which is to confine the optical signal within the core. To this end, the refractive indices of the core n_{c} and the cladding n_{g} are such that n_{c}>n_{g}. As is well known, the propagation of an optical signal in a single-mode optical fibre can be broken down into a fundamental mode which is guided in the core and into secondary modes which are guided over a certain distance in the core-cladding assembly, called cladding modes.

In standard fashion, step-index fibres, also called SMF ("Single Mode Fibres") are used as line fibres for optical fibre transmission systems. These optical fibres have a chromatic dispersion and a chromatic dispersion slope complying with specific telecommunications standards as well as standardized cut-off wavelength and effective area values.

In response to the need for compatibility between optical systems from different manufacturers, the International Telecommunication Union (ITU) has defined a standard, reference ITU-T G.652, with which a standard optical transmission optical fibre, called SSMF (Standard Single Mode Fibre), must comply.

Among others, the G.652 standard recommends for a transmission optical fibre the range of 8.6-9.5 µm [8.6; 9.5µm] for the Mode Field Diameter (MFD) at a wavelength of 1310 nm; a maximum of 1260 nm for the value of the cable cut-off wavelength, denoted λcc; the range of 1300-1324 nm [1300; 1324 nm] for the value of the zero dispersion wavelength, denoted ZDW; a maximum of 0.092 ps/nm²-km for the value of the chromatic dispersion slope at the ZDW. In standard fashion, the cable cut-off wavelength is measured as the wavelength at which the optical signal is no longer single mode after propagation over twenty-two metres of fibre, as defined by subcommittee 86A of the International Electrotechnical Commission in standard IEC 60793-1-44.

In a manner known *per se,* an increase in the effective area of a transmission optical fibre contributes to a reduction in the nonlinear effects in the optical fibre. A transmission optical fibre having an enlarged effective area allows a transmission over a longer distance and/or an increase in the operating margins of the transmission system. Typically, an SSMF has an effective area A_{eff} of the order of 80 µm².

In order to increase the effective area of a transmission optical fibre, it was proposed to produce fibre profiles having an enlarged and flattened core compared with an SSMF. However, such an alteration in the shape of the optical fibre's core leads to an increase in the microbending losses and to an increase in the effective and cable cut-off wavelength over the optical fibre. In standard fashion, the effective cut-off wavelength is measured as the wavelength from which the optical signal is single mode after propagation over two metres of optical fibre, as defined by subcommittee 86A of the IEC in standard IEC 60793-1-44.

US-A-6 658 190 describes transmission optical fibres with an enlarged effective area, greater than 110 µm². These optical fibres have a very wide core, 1.5 to 2 times that of an SSMF, and a configuration with a constant or shallowly depressed cladding. In order to compensate for the increase in microbending losses caused by an increase in the effective area, this document proposes increasing the diameter of the optical fibre (Figure 29). Such an increase in the diameter of the optical fibre, however, involves an increase in the cost and leads to cabling problems because of incompatibility with the other optical fibres. In addition, this document points out that the cut-off wavelength decreases with the length of the optical fibre under consideration (Figure 5) and in particular that the optical fibre achieves a single-mode character after 1 km of transmission. Such a measurement of the cut-off wavelength, however, does not comply with the standardized measurements cited above. The optical fibres described in this document have cable cut-off wavelengths greater than 1260 nm and zero chromatic dispersion wavelengths λ₀ less than 1300 nm.

US-B-6 516 123 describes optical fibres having an effective area greater than 100 µm², at a wavelength of 1550 nm. The optical fibres each have a cable cut-off wavelength that is greater than 1260 nm and therefore outside of the G.652 standard.

US-B-7 076 139 describes an optical fibre having an effective area of 120 µm², at a wavelength of 1550 nm. However, this optical fibre has a cable cut-off wavelength greater than 1260 nm, and a ZDW of around 1280 nm, values which therefore do not meet the G.652 standard.

US-A-2005/0 244 120 describes an example of an optical fibre with an effective area of 106 µm², at a wavelength of 1550 nm. This optical fibre, however, has a cut-off wavelength of 1858 nm, well above the limit imposed by the G.652 standard.

EP-A-1 477 831 describes examples of optical fibres having an effective area greater than 100 µm², at a wavelength of 1550 nm. The example of Figure 8 shows an optical ibre having a cut-off wavelength less than or equal to 1270 nm, but with a ZDW of 1295 nm (value calculated from the fibre profile) i.e. outside of the G.652 standard.

US-B-6 483 975 describes an optical fibre having an effective area greater than 100 µm², at a wavelength of 1550 nm. However, the cut-off wavelength values of this optical fibre are too high to meet the G.652 standard.

EP-A-1 978 383 describes optical fibres having an effective area greater than 120 µm², but a cut-off wavelength higher than 1260 nm, a zero chromatic dispersion wavelength as well as a dispersion slope at the zero chromatic dispersion wavelength which do not meet the G.652 standard.

None of the prior art documents identified describe an optical fibre having an effective area greater than 100 µm² at a wavelength of 1550 nm, and which meet the constraints of the G.652 standard.

There is therefore a need for a transmission optical fibre which has an enlarged effective area, greater than or equal to 100 µm² at a wavelength of 1550 nm, and which has a cable cut-off wavelength less than or equal to 1260 nm, a zero chromatic dispersion wavelength comprised between 1300 nm and 1324 nm, and a chromatic dispersion slope at the zero chromatic dispersion wavelength less than 0.092 ps/nm²-km; i.e. an optical fibre which has an enlarged area and which meets the constraints of the G.652 standard with the exception of the mode field diameter.

To this end, the invention proposes a fibre profile comprising a central core, a first inner cladding, a second inner cladding and an outer optical cladding; each of the central core, first and second inner cladding of the optical fibre are optimized simultaneously to enlarge the effective area of the optical fibre without adversely affecting the other transmission parameters imposed by the G.652 standard, with the exception of the mode field diameter.

More particularly, the invention proposes a single-mode optical fibre according to claim 1; having
- an effective area, at a wavelength of 1550 nm, greater than 100 µm², with:

- a cable cut-off wavelength less than 1260 nm;
- a zero chromatic dispersion wavelength comprised between 1300 nm and 1324 nm;
- a chromatic dispersion slope of less than 0.092 ps/nm²-km at the zero chromatic dispersion wavelength.

The present invention relates to the use of a "triple-clad" profile which are normally used for G.653/G.655/G.656 dispersion-shifted fibers, G.654 cutoff-shifted fibers or G.657 bend-insensitive fibers for the purpse of a single-mode G.652 optical fiber. The ranges of profile paramters as mentioned above to be essential for the present invention are very different than for those used for triple-clad profiles in the G.653/G.655/G.656 dispersion-shifted fibers, G.654 cutoff-shifted fibers or G.657 bend-insensitive fibers.

According to the present invention, the central core has a radius (r₁) comprised between 4.0 µm and 5.5 µm.

According to the present invention, the second inner cladding is a ring having a width (w₃), defined by r₃-r₂ (r₃ minus r₂) comprised between 0.9 µm and 1.6 µm; the second inner cladding has a positive index difference with the optical cladding. The ring has an index difference with the outer optical cladding comprised between 1×10⁻³ and 5.0×10⁻³. The central core can then have an index difference with the outer optical core comprised between 4.2×10⁻³ and 5.2×10⁻³ and the first inner cladding can then have a width (w₂) defined by r₂-r₁ comprised between 0.5 µm and 1.5 µm and an index difference with the outer optical cladding comprised between -2.0×10⁻³ and 1.0×10⁻³.

According to the present invention, the optical fibre has an effective area that is greater than or equal to 100 µm². Preferably the effective area is strictly greater than 100 µm².

According to an embodiment of the present invention, the optical fibre has, for a wavelength of 1625 nm, bending losses less than or equal to 0.05 dB/100ₜᵤᵣₙₛ for a radius of curvature of 30 mm.

According to an embodiment of the present invention, the optical fibre has, for a wavelength of 1550 nm, microbending losses such that the ratio of the microbending losses of the optical fibre to the microbending losses of a standard single-mode fibre (SSMF) subjected to identical constraints is less than or equal to 2.

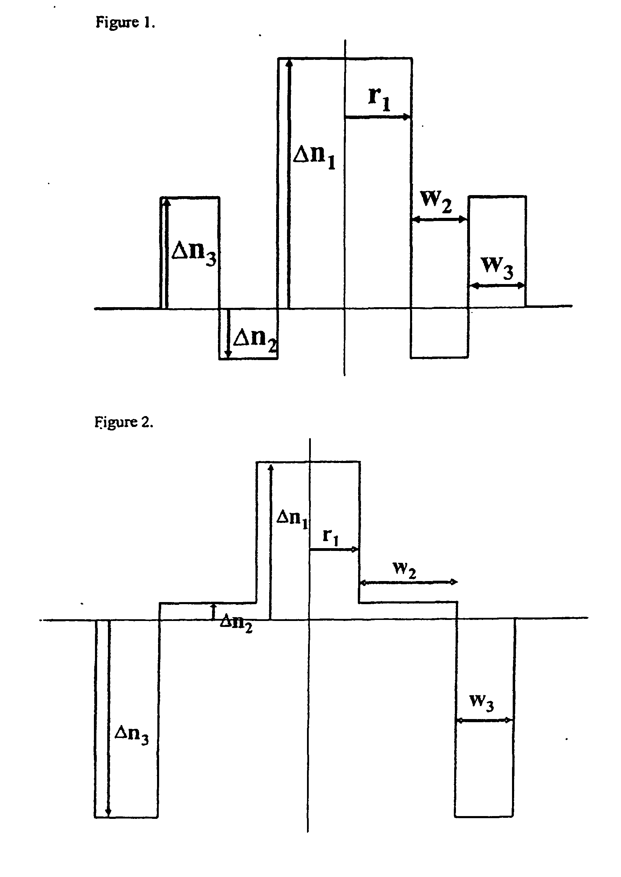

Other characteristics and advantages of the invention will become apparent on reading the description which follows of embodiments of the invention, given by way of example and with reference to the attached figures which show:
- Figure 1, a diagrammatic representation of the set profile of an optical fibre according to a first embodiment of the invention;
- Figure 2, a diagrammatic representation of the set profile of an optical fibre according to a second embodiment not part of the invention.
   The optical fibre of the invention will be described with reference to Figures 1 and 2 which each represent a set profile, i.e. representative of the theoretical profile of the optical fibre, the optical fibre actually obtained after optical fibre drawing of a preform being able to have a slightly different profile.
   Typically, the central core and the first and second inner claddings are obtained by a CVD type deposition in a silica tube and the outer optical cladding is constituted by overcladding the tube generally with natural or doped silica, but can also be obtained by any other deposition technique (VAD or OVD).
   According to a first embodiment (Figure 1), the transmission optical fibre according to the invention comprises a central core having an index difference Δn₁ with an outer optical cladding, serving as optical cladding, a first inner cladding corresponding to an intermediate cladding having an index difference Δn₂ with the outer optical cladding, and a second inner cladding corresponding to a ring having a positive index difference Δn₃ with the outer optical cladding. The first inner cladding (w₂, r₂, Δn₂) directly surrounds the central core (r₁, Δn₁) and the ring of the second inner cladding (w₃, r₃, Δn₃) directly surrounds the first inner cladding (w₂, r₂, Δ n₂). The refractive indices in the intermediate cladding and in the ring are approximately constant over their entire lengths. The central core can be in the shape of a step, trapezoid, triangle or alpha. The width of the central core is defined by its radius r₁, and the widths w₂ of the intermediate cladding and w₃ of the ring by the difference between their respective outer radius and their respective inner radius.
   In the optical fibre according to the first embodiment of the invention, the central core has a radius r₁ comprised between 4.0 µm and 5.5 µm, and an index difference Δn₁ preferably comprised between 4.2×10⁻³ and 5.2×10⁻³ compared with the outer optical cladding (in silica for example). The value of the radius r₁ has to be large enough to allow an increase in the effective area, but also small enough to obtain a cable cut-off wavelength less than or equal to 1260 nm. The intermediate cladding of the optical fibre according to the first embodiment of the invention has a width w₂ comprised between 0.5 µm and 1.5 µm. This cladding also has an index difference Δn₂ with the outer optical cladding preferably comprised between -2×10⁻³ and 1.0×10⁻³. The width w₂ of the intermediate cladding has to be small enough to ensure an effective area, at a wavelength of 1550 nm, which is greater than or equal to 100 µm². The ring has a width w₃ comprised between 0.9 µm and 1.6 µm. This ring has an index difference Δn₃ with the outer optical cladding comprised between 1.0×10⁻³ and 5.0×10⁻³. The width w₃ of the ring has to be small enough to obtain a cable cut-off wavelength less than or equal to 1260 nm, a zero chromatic dispersion wavelength comprised between 1300 nm and 1324 nm, and a chromatic dispersion slope at the zero chromatic dispersion wavelength less than 0.092 ps/nm²-km.
   Table I below gives five examples of possible refractive index profiles for a transmission optical fibre according to the first embodiment of the invention, in comparison with the refractive index profiles of optical fibres described in the state of the art. The first column gives a reference to each profile, the following three columns show the radius values and the widths of each section (r₁, w₂, w₃), and the last columns show the values of the index differences of each section with the outer cladding (Δn₁ to Δn₃). The index values are measured at a wavelength of 633 nm. The optical fibres of the examples from Table I have an outer diameter of 125 µm. The values in Table I correspond to set profiles of optical fibres.

**TABLE I**

| Examples of profiles according to the 1^{st} embodiment | r₁ (µm) | w₂ (µm) | w₃ (µm) | Δn₁(.10⁻³) @633 nm | Δn₂(.10⁻³) @633 nm | Δn₃(.10⁻³) @633 nm |
|---|---|---|---|---|---|---|
| 1 | 4.51 | 1.10 | 1.22 | 4.7 | 0.4 | 2.4 |
| 2 | 4.37 | 0.61 | 1.44 | 4.8 | -0.7 | 2.9 |
| 3 | 4.50 | 0.65 | 1.39 | 4.7 | -1.1 | 3.0 |
| 4 | 4.40 | 0.91 | 1.27 | 4.7 | 0.2 | 3.0 |
| 5 | 4.87 | 1.01 | 1.14 | 4.5 | -1.2 | 3.0 |
| US-B-6 516 123 | 5.00 | 1.20 | **2.00** | 4.9 | -2.9 | 3.2 |
| US-B-7 076 139 | **7.75** | **18.60** | **4.65** | 4.1 | -0.7 | 1.9 |

Table II below follows shows optical features simulated for the transmission optical fibres corresponding to the index profiles of Table I. In Table II, the first column repeats the references of Table I. The following columns provide, for each fibre profile, the values of cable cut-off wavelength λ_{cc}, mode field diameter 2W₀₂ for the wavelength of 1310 nm, effective area A_{eff} at a wavelength of 1550 nm, chromatic dispersion D at a wavelength of 1550 nm, and chromatic dispersion slope P at a wavelength of 1550 nm. The last columns provide, for each fibre profile, the values of zero chromatic dispersion wavelength ZDW, and chromatic dispersion slope P_{ZDW} at this wavelength.

**TABLE II**

| Examples of profiles according to the 1^{st} embodiment | λ_{cc} (nm) | 2W₀₂ @1310 nm (µm) | A_{eff} @1550 nm (µm²) | D @1550 nm (ps/nm- km) | P @1550 nm (ps/nm²- km) | ZDW (nm) | P_{ZDW} @ZDW (ps/nm²-km) |
|---|---|---|---|---|---|---|---|
| 1 | 1260 | 10.1 | 100 | 17.5 | 0.062 | 1310 | 0.090 |
| 2 | 1260 | 10.2 | 101 | 17.6 | 0.062 | 1310 | 0.090 |
| 3 | 1260 | 10.4 | 105 | 17.6 | 0.062 | 1310 | 0.090 |
| 4 | 1260 | 10.3 | 104 | 17.6 | 0.062 | 1310 | 0.090 |
| 5 | 1250 | 10.4 | 106 | 17.5 | 0.062 | 1310 | 0.090 |
| US-B-6 516 123 | **>1350** | 10.0 | 100 | 17.4 | 0.062 | 1310 | 0.086 |
| US-B-7 076 139 | **>1400** | 12.6 | 156 | 21.2 | 0.064 | **<1290** | **>0.095** |

For the five examples according to the first embodiment of the invention, it is noted from Table II that the effective area A_{eff} at a wavelength of 1550 nm is greater than or equal to 100 µm², or even strictly greater than 100 µm² for four of the examples. The mode field diameter 2W₀₂ for the wavelength 1310 nm is greater than 9.5 µm. The optical fibre according to the first embodiment therefore does not meet all of the G.652 standards. However, a mode field diameter 2W₀₂ for the wavelength 1310 nm outside of the G.652 standard is not detrimental, because most current optical systems no longer operate at a wavelength of 1310 nm. A cable cut-off wavelength λ_{cc} that is less than or equal to 1260 nm, a zero chromatic dispersion wavelength ZDW that is comprised between 1300 nm and 1324 nm, and a chromatic dispersion slope P_{ZDW} at the zero chromatic dispersion wavelength that is less than 0.092 ps/nm²-km are observed. Thus the optical fibre according to the first embodiment of the invention meets the constraints of the G.652 standard on the cable cut-off wavelength, the zero chromatic dispersion wavelength, and the chromatic dispersion slope at the zero chromatic dispersion wavelength.

The optical fibre according to the first embodiment of the invention is optimized to comply with the constraints of an effective area greater than or equal to 100 µm² while preserving the optical parameters meeting the G.652 standard, with the exception of the specifications on the mode field diameter. To better understand these optimizations, the limits of the optical fibres of the state of the art will be described in connection with the parameters shown in bold in Tables I and II. In the optical fibre described in US-B-6 516 123, the cable cut-off wavelength is greater than 1260 nm because the width w₃ of the ring is too large. In the optical fibre described in US-B-7 076 139, the cable cut-off wavelength is greater than 1260 nm because the width w₃ of the ring is too large; the zero chromatic dispersion wavelength is less than 1300 nm, and the chromatic dispersion slope at the zero chromatic dispersion wavelength is greater than 0.092 ps/nm²-km because the width r₁ of the core and the width w₂ of the intermediate cladding are too great.

According to a second embodiment not part of the invention (Figure 2), the transmission optical fibre comprises a central core having an index difference Δn₁ with an outer optical cladding, serving as optical cladding, a first inner cladding corresponding to an intermediate cladding having an index difference Δn₂ with the outer optical cladding, and a second inner cladding corresponding to a depressed cladding having a negative index difference Δn₃ with the outer optical cladding. The first inner cladding (w₂, r₂, Δn₂) directly surrounds the central core (r₁, Δn₁) and the depressed cladding of the second inner cladding (w₃, r₃, Δn₃) directly surrounds the first inner cladding (w₂, Δ n₂). The refractive indices in the intermediate cladding and in the depressed cladding are approximately constant over their entire lengths. The central core can have a step, trapezoid, triangle or alpha shape. The width of the central core is defined by its radius r₁, and the widths w₂ of the intermediate cladding and w₃ of the cladding by the difference between their respective outer radius and their respective inner radius.

In the optical fibre according to the second embodiment, the central core has a radius r₁ comprised between 4.0 µm and 5.5 µm, and an index difference Δn₁ preferably comprised between 3.5×10⁻³ and 5.0×10⁻³ compared with the outer optical cladding (in silica for example). The value of the radius r₁ of the central core has to be large enough to allow an effective area greater than or equal to 100 µm² to be achieved, but also small enough to obtain a cable cut-off wavelength less than 1260 nm. The intermediate cladding of the optical fibre according to the second embodiment of the invention has a width w₂ comprised between 7.0 µm and 10.0 µm. This cladding also has an index difference Δn₂ with the outer optical cladding preferably comprised between -1.0×10⁻³ and 1.0×10⁻³. The width w₂ of the intermediate cladding has to be large enough to allow a zero chromatic dispersion wavelength greater than 1300 nm, and a chromatic dispersion slope at the zero chromatic dispersion wavelength less than 0.092 ps/nm²-km. The optical fibre according to the second embodiment then comprises a depressed cladding with a width w₃ comprised between 2.5 µm and 4.5 µm. This depressed cladding has an index difference Δn₃ with the outer optical cladding less than -3.5×10⁻³ and preferably greater than - 10×10⁻³. The width and depth of the depressed cladding are chosen respectively small enough and large enough in such a way that, combined with the parameters described above, the profile is optimized so as to obtain a cable cut-off wavelength less than or equal to 1260 nm, a zero chromatic dispersion wavelength comprised between 1300 nm and 1324 nm, and a chromatic dispersion slope at the zero chromatic dispersion wavelength less than 0.092 ps/nm²-km.

Table III below gives four examples of possible index profiles for a transmission optical fibre according to the second embodiment, in comparison with the index profiles of optical fibres described in the state of the art. The first column gives a reference to each profile, the following three columns show the radius values and the widths of each section (r₁, w₂, w₃), and the last columns show the values of the index differences of each section with the outer cladding (Δn₁ to Δn₃). The index values are measured at a wavelength of 633 nm. The optical fibres of the examples from Table III have an outer diameter of 125 µm. The values in Table I correspond to set profiles of optical fibres.

**TABLE III**

| Examples of profiles according to the 2^{nd} embodiment | r₁ (µm) | w₂ (µm) | w₃ (µm) | Δn₁(.10⁻³) @633 nm | Δn₂(.10⁻³) @633 nm | Δn₃(.10⁻³) @633 nm |
|---|---|---|---|---|---|---|
| 1 | 4.75 | 8.08 | 3.17 | 4.1 | 0.1 | -6.0 |
| 2 | 4.76 | 7.80 | 3.44 | 4.0 | 0.2 | -6.0 |
| 3 | 4.77 | 7.31 | 3.92 | 3.9 | 0.3 | -6.0 |
| 4 | 4.71 | 7.23 | 3.06 | 4.2 | 0.3 | -6.0 |
| EP-A-1 978 383 | **6.04** | **5.23** | 4.73 | 4.3 | 0.0 | -4.7 |
| US-A-2005/0 244 120 | **7.10** | **5.20** | **12.80** | 4.6 | 0.0 | **-2.9** |
| EP-A-1 477 831 | **6.00** | 10.00 | **18.00** | 4.0 | -0.3 | **-1.3** |

Table IV below shows optical features simulated for the transmission optical fibres corresponding to the index profiles of Table III. In Table IV, the first column repeats the references of Table III. The following columns provide, for each fibre profile, the values of cable cut-off wavelength λ_{cc}, mode field diameter 2W₀₂ for the wavelength of 1310 nm, effective area A_{eff} at a wavelength of 1550 nm, chromatic dispersion D at a wavelength of 1550 nm, and chromatic dispersion slope P at a wavelength of 1550 nm. The last columns provide, for each fibre profile, the values of zero chromatic dispersion wavelength ZDW, and chromatic dispersion slope P_{ZDW} at this wavelength.

**TABLE IV**

| Examples of profiles according to the 2^{nd} embodiment | λ_{cc} (nm) | 2W₀₂ @1310 nm (µm) | A_{eff} @1550 nm (µm²) | D @1550 nm(ps/nm-km) | P @1550 nm (ps/nm ²-km) | ZDW (nm) | P_{ZDW} @ZDW (ps/nm²-km) |
|---|---|---|---|---|---|---|---|
| 1 | 1190 | 10.2 | 102 | 17.9 | 0.063 | 1310 | 0.090 |
| 2 | 1190 | 10.3 | 104 | 18.0 | 0.063 | 1310 | 0.090 |
| 3 | 1200 | 10.6 | 108 | 18.3 | 0.064 | 1305 | 0.091 |
| 4 | 1200 | 10.3 | 103 | 18.1 | 0.064 | 1310 | 0.090 |
| EP-A-1 978 383 | >1400 | 11.3 | 122 | 20.5 | 0.064 | **<1290** | **>0.095** |
| US-A-2005/0 244 120 | **1858** | 10.5 | 106 | 19.2 | 0.064 | 1301 | 0.092 |
| EP-A-1 477 831 | ≤1270 | 10.8 | 110 | 18.6 | 0.061 | **<1300** | 0.092 |

For the four examples according to the second embodiment , it is noted from Table IV that the effective area A_{eff} at a wavelength of 1550 nm is greater than or equal to 100 µm², or even strictly greater than 100 µm². The mode field diameter 2W₀₂ for the wavelength 1310 nm is greater than 9.5 µm. The optical fibre according to the second embodiment therefore does not meet all of the G.652 standards. However, a mode field diameter 2W₀₂ for the wavelength 1310 nm outside of the G.652 standard is not detrimental, because most current optical systems no longer operate at a wavelength of 1310 nm. A cable cut-off wavelength λ_{cc} that is less than or equal to 1260 nm, a zero chromatic dispersion wavelength ZDW that is comprised between 1300 nm and 1324 nm, and a chromatic dispersion slope P_{ZDW} at the zero chromatic dispersion wavelength that is less than 0.092 ps/nm²-km are observed. Thus the optical fibre according to the second embodiment meets the constraints of the G.652 standard on the cable cut-off wavelength, the zero chromatic dispersion wavelength, and the chromatic dispersion slope at the zero chromatic dispersion wavelength.

The optical fibre according to the second embodiment is optimized to comply with the constraints of an effective area greater than or equal to 100 µm² while preserving the optical parameters meeting the G.652 standard, with the exception of the specifications on the mode field diameter. To better understand these optimizations, the limits of the optical fibres of the state of the art will be described in connection with the parameters shown in bold in Tables III and IV. In the optical fibre described in EP-A-1 978 383, the cable cut-off wavelength is greater than 1260 nm, the zero chromatic dispersion wavelength is less than 1300 nm, and the chromatic dispersion slope at the zero chromatic dispersion wavelength is greater than 0.092 ps/nm²-km, because the radius r₁ of the core is too large and the width w₂ of the intermediate cladding is too small. In the optical fibre described in US-A-2005/0244120, the cable cut-off wavelength is greater than 1260 nm, because the radius r₁ of the core, the width w₃ and the index difference Δn₃ of the depressed cladding are too large. Finally, in the optical fibre described in EP-A-1 477 831, the zero chromatic dispersion wavelength is less than 1300 nm, because the cladding is very wide and shallow.

The optical fibre according to the invention has bending losses for a radius of 30 mm that are less than 0.05 dB/(100 turns) for a wavelength of 1625 nm. These bending loss values are equivalent to those of standard optical fibres. Moreover, the optical fibre according to the invention has microbending losses such that the ratio of the microbending losses of an optical fibre according to the invention to the microbending losses in an SSMF subjected to identical constraints is less than or equal to 2, or even 1.5. The microbending losses can be measured, for example, by a method termed the fixed diameter drum method. This method is described in the technical recommendation of the IEC subcommittee 86A under the reference IEC TR-62221.

The transmission optical fibre according to the invention is particularly suited to long-distance transmission systems. The increase in the effective area, without significant degradation of the other optical parameters of the optical fibre, allows an increase in the power of the optical signals transmitted without increasing the nonlinear effects; the signal-to-noise ratio of the transmission line is thus improved, which is particularly desireable after in land-based or underwater long-distance optical transmission systems.

The optical fibre according to the invention has an effective area value that is increased compared with an SSMF. In addition, the optical fibre according to the invention complies with the recommendations of the standard ITU-T G.652, with the exception of the specifications on the value of the mode field diameter 2W₀ at a wavelength of 1310 nm. The optical fibre according to the invention can thus be installed in a number of transmission systems with good compatibility with the other optical fibres of the system.

## Claims

1. A single-mode optical fibre comprising:
- a central core having a radius r₁ comprised between 4.0 µm and 5.5 µm and a positive index difference Δn₁ with an outer optical cladding comprised between 4.2×10⁻³ and 5.2×10⁻³;
- a first inner cladding having a radius r₂, a width w₂ defined by r₂-r₁ comprised between 0.5 µm and 1.5 µm and an index difference Δn₂ with the outer cladding comprised between -2.0×10⁻³ and 1.0×10⁻³;
- a second inner cladding being a ring having a radius r₃, a width w₃ defined as r₃-r₂ comprised between 0.9 µm and 1.6 µm and a positive index difference Δn₃ comprised between 1 × 10⁻³ and 5.0× 10⁻³ with the outer cladding;
the optical fibre having:
- an effective area at a wavelength of 1550 nm that is greater than or equal to 100 µm²,
- a cable cut-off wavelength of less than 1260 nm;
- a zero chromatic dispersion wavelength comprised between 1300 nm and 1324 nm;
- a chromatic dispersion slope of less than 0.092 ps/nm²-km at the zero chromatic dispersion wavelength.

2. The single-mode optical fibre according to claim 1, **characterized in that** it has, for a wavelength of 1625 nm, bending losses less than or equal to 0.05 dB/100ₜᵤᵣₙₛ for a radius of curvature of 30 mm.

3. The single-mode optical fibre according to one of the preceding claims, **characterized in that** it has, for a wavelength of 1550 nm, microbending losses such that the ratio of the microbending losses of the fibre to the microbending losses of a standard single-mode fibre SSMF subjected to identical constraints is less than or equal to 2.

## Patentansprüche

1. Einmoden-Lichtleitfaser mit:
- einem zentralen Kern, der einen Radius r₁, der zwischen 4,0 µm und 5,5 µm liegt, und einen positiven Indexunterschied Δn₁ zu einem äußeren optischen Mantel aufweist, der zwischen 4,2×10⁻³ und 5,2×10⁻³ liegt,
- einem ersten inneren Mantel, der einen Radius r₂, eine durch r₂-r₁ definierte Breite w₂, die zwischen 0,5 µm und 1,5 µm liegt, und einen Indexunterschied Δn₂ zu dem äußeren Mantel aufweist, der zwischen -2,0×10⁻³ und 1,0×10⁻³ liegt,
- einem zweiten inneren Mantel, der ein Ring ist, der einen Radius r₃, eine als r₃-r₂ definierte Breite w₃, die zwischen 0,9 µm und 1,6 µm liegt, und einen positiven Indexunterschied Δn₃, der zwischen 1 ×10⁻³ und 5,0×10⁻³ liegt, zu dem äußeren Mantel aufweist,
wobei die Lichtleitfaser Folgendes aufweist:
- eine Wirkfläche bei einer Wellenlänge von 1550 nm, die größer oder gleich 100 µm² ist,
- eine Kabel-Grenzwellenlänge von kleiner als 1260 nm,
- eine chromatische Nulldispersionswellenlänge, die zwischen 1300 nm und 1324 nm liegt,
- eine Steigung der chromatischen Dispersion, die bei der chromatischen Nulldispersionswellenlänge kleiner als 0,092 ps/nm²-km ist.

2. Einmoden-Lichtleitfaser nach Anspruch 1, **dadurch gekennzeichnet, dass** sie für eine Wellenlänge von 1625 nm Krümmungsverluste kleiner oder gleich 0,05 dB/100_{windungen} bei einem Krümmungsradius von 30 mm hat.

3. Einmoden-Lichtleitfaser nach einem der vorhergehenden Ansprüche, **dadurch gekennzeichnet, dass** sie für eine Wellenlänge von 1550 nm Mikrokrümmungsverluste derart hat, dass das Verhältnis der Mikrokrümmungsverluste der Faser zu den Mikrokrümmungsverlusten einer identischen Bedingungen ausgesetzten Standard-Einmodenfaser SSMF (auf Englisch: standard single-mode fibre) kleiner oder gleich 2 ist.

## Revendications

1. Fibre optique monomode comprenant :
- un coeur central ayant un rayon r₁ compris entre 4,0 µm et 5,5 µm et une différence d'indice positive Δn₁ avec une gaine optique extérieure comprise entre 4,2 × 10⁻³ et 5,2 × 10⁻³;
- une première gaine intérieure ayant un rayon r₂, une largeur w₂ définie par r₂-r₁ comprise entre 0,5 µm et 1,5 µm et une différence d'indice Δn₂ avec la gaine extérieure comprise entre -2,0 × 10⁻³ et 1,0 × 10⁻³ ;
- une deuxième gaine intérieure annulaire ayant un rayon r₃, une largeur w₃ définie par r₃-r₂ comprise entre 0,9 µm et 1,6 µm et une différence d'indice positive Δn₃ comprise entre 1 × 10⁻³ et 5,0 × 10⁻³ avec la gaine extérieure ;
la fibre optique ayant :
- une surface effective à une longueur d'onde de 1.550 nm qui est supérieure ou égale à 100 µm²,
- une longueur d'onde de coupure en câble inférieure à 1.260 nm ;
- une longueur d'onde d'annulation de la dispersion chromatique comprise entre 1.300 nm et 1.324 nm ;
- une pente de dispersion chromatique inférieure à 0,092 ps/nm²-km à la longueur d'onde d'annulation de la dispersion chromatique.

2. Fibre optique monomode selon la revendication 1, **caractérisée en ce qu'**elle a, pour une longueur d'onde de 1.625 nm, des pertes de flexion inférieures ou égales à 0,05 dB/100ₜₒᵤᵣₛ pour un rayon de courbure de 30 mm.

3. Fibre optique monomode selon l'une des revendications précédentes, **caractérisée en ce qu'**elle a, pour une longueur d'onde de 1.550 nm, des pertes de microflexion telles que le rapport entre les pertes de microflexion de la fibre et les pertes de microflexion d'une fibre monomode standard SSMF (en anglais : standard single-mode fibre) soumises à des contraintes identiques est inférieur ou égal à 2.
